# EUROPEAN PATENT APPLICATION

(11) **EP 1 785 757 A1**
(43) Date of publication of application: **16.05.2007**
(21) Application number: 06123813.5
(22) Date of filing: 10.11.2006
(51) Int. Cl.: G02B 6/136

(54) **Silicon Based Optical Waveguide Structures and Methods Of Manufacture**

(30) Priority: 10.11.2005 US 271107
(71) Applicant: HONEYWELL INC., Morristown, NJ 07962 (US)
(72) Inventor: KEYSER, Thomas, Plymouth, MN 55446 (US); YUE, Cheisan J., Roseville, MN 55113 (US)
(74) Representative: Haley, Stephen

(57) **Abstract**

Silicon based thin-film optical waveguides and method of making. A method in accordance with one aspect of the present invention generally comprises the steps of providing a substrate, depositing a thin-film dielectric layer on the substrate, forming a channel in the thin-film dielectric layer, and providing a silicon layer in the channel. The silicon layer provided in the channel can be epitaxially grown in the channel. In another aspect of the present invention, the silicon layer provided in the channel can be provided as an amorphous or partially crystalline material that is subsequently crystallized.

## Description

The present invention relates to optical interconnections for silicon based photonic integrated circuits, More particularly, the present invention relates to silicon based thin-film waveguide structures for providing optical communication between components of photonic integrated circuits and methods of making such structures.

Photonic integrated circuits provide an integrated platform increasingly used to form complex optical systems. This technology allows many optical devices, both active and passive, to be integrated on a single substrate. For example, photonic integrated circuits may comprise integrated lasers, integrated receivers, waveguides, detectors, semiconductor optical amplifiers, and other active and passive semiconductor optical devices. Such monolithic integration of active and passive devices provides an effective integrated technology platform for use in optical communications, information processing and storage and the like,

Photonic integrated circuits rely on efficient optical interconnections to transmit light between the components and devices that form these integrated circuits. Conventional optical interconnections usually employ thin-film optical waveguides as devise interconnects. Specifically, circuit fabricators have used thin-films of semiconductor materials to form optical waveguides that are integrated with thin-film optical, electronic, and opto-electronic devices formed on the substrate of the photonic integrated circuit. When a light-transmissive material is surrounded or otherwise bounded by another material having a lower refractive index, light propagating through the inner material is rejected at the boundary between the two materials. This produces a guiding effect. However, light can be lost at this boundary because of edge effects, surface imperfections, toughness, and the like. In this regard, it is desired that optical-propagation losses be kept to a minimum in such waveguides to provide efficient photonic integrated circuits,

In conventional methods, optical waveguides are generally formed on a substrate by photolithography. One type of optical waveguide is known as a ridge waveguide. Ridge waveguides are typically made by masking a portion of the substrate and etching away or otherwise removing an exposed portion to define guiding sidewalls of the optical waveguide, As a result, the cross section of the waveguide is normally square or trapezoidal in shape. When the light transmitting material of a waveguide is fabricated by etching in this way, its side surfaces can be roughened, and hence, undesirable transmission loss can occur.

The present invention thus provides methods of making silicon based thin-film optical waveguides with minimal optical-propagation losses. In particular, optical waveguides in accordance with the present invention can be formed without the need to etch sidewalls of the light guiding material of the waveguide. In this way, optical transmission losses caused by surface imperfections or roughness can be minimized or eliminated. Moreover the present invention provides a way to integrate a silicon waveguide with one or more optical, electronic, or opto-electronic devices on a common substrate.

Optical waveguides in accordance with the present invention can be used in photonic integrated circuits for providing functions, such as optical transmission, optical branching/combining, wavelength filtering, wavelength multiplexing, or demultiplexing, and optical modulation of light intensity or phase. Such waveguides can be used in the fields of optical information transmission, such as optical communication and optical interconnection, and information processing, such as optical memory.

Accordingly, in one aspect of the present invention a method of making a silicon based thin-film optical waveguide is provided. The method generally comprises the steps of providing a substrate, depositing a thin-film dielectric layer on the substrate, forming a channel in the thin-film dielectric layer, and providing a silicon layer in the channel. The substrate comprises a silicon layer having a surface. The thin-film dielectric layer is deposited on at least a portion of the surface of the silicon layer of the substrate. The channel in the thin-film dielectric layer exposes a portion of the surface of the silicon layer of the substrate, which defines at least a portion of a path for an optical waveguide. The silicon layer provided in the channel is in contact with the exposed portion of the surface of the silicon layer of the substrate.

In another aspect of the present invention, a method of making a silicon based thin-film optical waveguide that is integrated with a silicon-on-insulator substrate is provided. The method generally comprises the steps of providing a silicon-on-insulator substrate, depositing a thin-film dielectric layer on the substrate, forming a channel in the thin-film dielectric layer, and providing a single crystal silicon layer in the channel. The substrate comprises a silicon-on-insulator substrate having a single crystal silicon layer having a surface. The thin-film dielectric layer is deposited on at least a portion of the surface of the single crystal silicon layer of the substrate. The channel in the thin-film dielectric layer exposes a portion of the surface of the single crystal silicon layer of the substrate, which defines at least a portion of a path for an optical waveguide. The single crystal silicon layer provided in the channel is in contact with the exposed portion of the surface of the single crystal silicon layer of the silicon-on-insulator substrate.

In yet another aspect of the present invention, a method of making a silicon based photonic integrated circuit is provided. Generally, the method comprises the steps of providing a silicon-on-insulator substate, depositing a thin-film dielectric layer on the substrate, forming a thin-film optical waveguide, and forming an opto-electronic device. The substrate comprises a silicon-on-insulator substrate having a single crystal silicon layer having a surface. The thin-film dielectric layer is deposited on at least a portion of the surface of the single crystal silicon layer of the substrate. The thin-film optical waveguide is provided by first forming a channel in the thin-film dielectric layer that exposes a portion of the surface of the single crystal silicon layer, which channel defines at least a portion of a path for the optical waveguide and subsequently providing a single crystal silicon layer in at least a portion of the channel. The opto-electronic device is formed in at least a portion of the substrate.

### In the Drawings:

These and other features, aspects, and advantages of the present invention will become better understood with regard to the following description, appended claims, and accompanying drawings where:
Figure 1 is a schematic cross-sectional view of an exemplary optical waveguide of the present invention showing in particular first and second silicon layers that define a guiding region of the waveguide;
Figure 2 is a schematic cross-sectional view of a silicon-on-insulator structure that can be used to form an optical waveguide in accordance with the present invention;
Figure 3 is a schematic cross-sectional view of the silicon-on-insulator structure of Figure 2 showing in particular a thin-film dielectric layer to provide a layered structure having a channel for defining a waveguide path in accordance with the present invention;
Figure 4 is a schematic cross-sectional view of the layered structure of Figure 3 showing in particular a silicon layer that has been provided on the layered structure and in the channel to define a guiding portion of a waveguide; and
Figure 5 is a schematic cross-sectional view of the layered structure of Figure 4 after partial removal of the silicon layer, thus providing a planarized structure that provides an optical waveguide in accordance with the present invention.

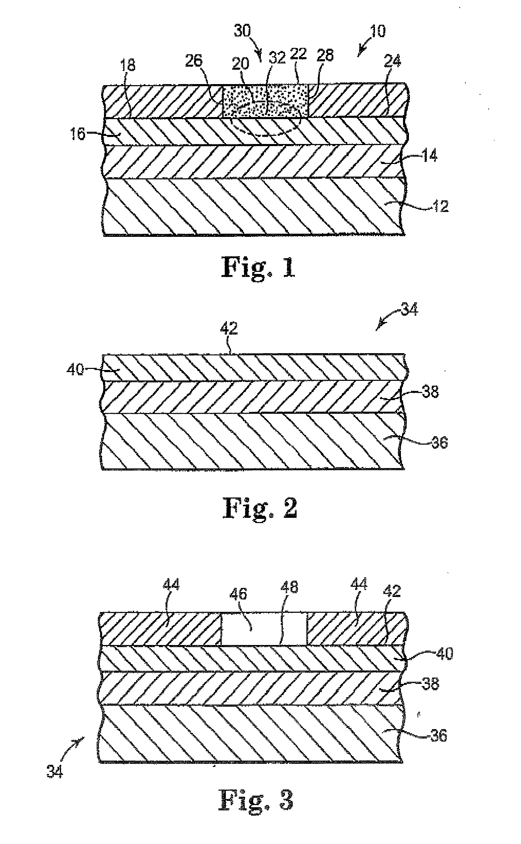

In Figure 1, an optical waveguide 10 in accordance with the present invention is schematically illustrated in cross-section. As shown, the optical waveguide 10 includes a substrate 12, preferably silicon, buried oxide layer 14, a first silicon layer 16 having silicon surface 18. second silicon layer 20 having surface 22, and dielectric layer 24. The first and second silicon layers, 16 and 20, function as the light transmissive material through which light travels in a propagation direction. First and second interfaces, 26 and 28, between the dielectric layer 24 and the second silicon layer 20 as well as the surface 22 of the second silicon layer 20 function to confine and guide light in a guiding region 30 when the index of refraction of the dielectric layer 24 is less than that of the silicon layer, 16 and 20. The dielectric layer 24 may be formed from or include material or combination thereof, such as silicon oxide, silicon nitride, aluminum oxide, aluminum nitride, as well as those materials generally characterized as dielectrics or insulators. The surface 22 of second silicon layer 20 can similarly provide a guiding function when the surface forms an interface with ambient air or other gas having an index of refraction lower than that of silicon. If desired, a thin-film layer (not shown) can be provided on the surface 22 for any guiding, passivating, or protective functions, or the like. Also, other functional layers such as passivating or protective layers, for example, can be provided anywhere in the layered structure of the waveguide 10,

In order to illustrate such guiding and confining functionality, a mode 32 of an electromagnetic field that can propagate through the guiding region 30 of the optical waveguide 10 is illustrated schematically. More specifically, the waveguide 10 is preferably designed for single mode transmission. That is, the waveguide 10 is preferably designed so that the lowest order bound mode (also called the fundamental guided mode or tapped mode) can propagate at the wavelength of interest For typical optical communications systems, wavelengths in the near infra-red portion of the electromagnetic spectrum are typically used, For example, wavelengths around 1.55 microns are common.

Preferably, the first silicon layer 16 and the buried oxide layer 14 are provided as a silicon-on-insulator structure, as such are conventionally known or as may be further advanced in the future. However, the optical waveguide 10 does not require use of silicon-on-insulator technology and the layered thin-film structure of the optical waveguide 10 may be formed by any appropriate thin-film deposition and processing techniques. Silicon-on-insulator structures are preferred because of their compatibility with conventional complementary metal oxide semiconductor (CMOS) processing- Silicon-on-insulator structures are also preferred because such structure typically provides high quality single crystal silicon material as the first silicon layer14. Such single crystal silicon material generally has minimal defects or imperfections that can contribute to optical losses. Also, the optical functionality of photonics based devices such as optical modulators, laser, and switches, and the like can be integrated with the electrical functionality of devices such as transistor resistors, capacitors, and inductors on the same substrate. These opto-electronic and electronic devices can be formed by using the common processing techniques to provide optical or photonic circuits that are integrated with electronic circuits and devices. Moreover, silicon-on-insulator technology provides an easy way to provide a high quality single crystal layer and to electrically isolate plural devices that can be formed in the silicon layer from each other.

Optical waveguides in accordance with the present invention, such as the optical waveguide 10 shown in Figure 1, can be made as described below. Preferably, conventional CMOS processing techniques can be used although any other known or developed techniques can be used instead of or in combination.

Referring to Figure 2, a typical silicon-on-insutator structure 34 is illustrated that includes substrate 36 (conventionally a silicon layer), dielectric layer 38 (conventionally known as a buried oxide layer), and first silicon layer 40 having surface 42 is illustrated. Such silicon-on-insulator substrates are commercially available and it is contemplated that similarly functioning future developed structures can be used for making waveguide structures and photonic integrated circuits in accordance with the present invention. The thickness of the buried oxide layer 38 and the thickness of the first silicon layer 40 are preferably selected by considering certain desired properties of the particular optical waveguide or photonic integrated circuit to be made, such as the dimensions and/or structure of the other devices or components of the photonic integrated circuit, the ability to create and isolate devices and components, as well as the processing techniques to be used, Preferably, as shown in Figure 3, a dielectric layer 44 having a channel 46 formed therein is provided on the surface 42 of the first silicon layer 40. The dielectric layer 44 may be silicon dioxide or silicon nitride, for example. As shown, the channel 46 exposes a surface portion 48 of the surface 42 of the first silicon layer 40. The channel 46 also functions to define a path or route for the waveguide. The dielectric layer 44 and channel 46 can be formed by using any appropriate conventionally known or future developed deposition, photolithography, and/or etching techniques. For example, the dielectric layer 44 can be deposited on the surface 42 as a blanket thin-film, masked to define the channel 46, and etched to remove a portion of the dielectric layer 44 to form the channel 46. As another example, deposition of the dielectric layer 44 can be controlled selectively prevent deposition of dielectric in the region of the channel 46 during the deposition step. That is, a mask can be provided on the surface 42 of the silicon layer 40 where it is desired to form the channel 46. Dielectric material can be deposited on the masked and unmasked surfaces and a liftoff technique can be used to remove the mask together with deposited material in the region of the channel 46. In this regard, wet and/or dry etching techniques are contemplated. Any deposition techniques may be used such as those including chemical vapor deposition, physical vapor deposition, and the like.

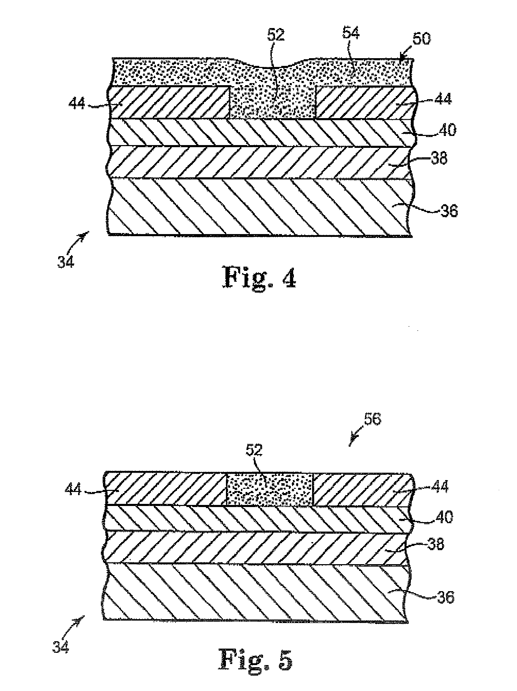

After the channel is created, a second silicon layer 50 is provided such as shown in Figure 4. As illustrated, the second silicon layer 50 includes a waveguide portion 52 in the channel 46 and an overcoat portion 54 that is on the dielectric layer 44 and over the portion 52. In accordance with the present invention the silicon layer 50 can be epitaxially grown as a crystalline thin film or deposited as an amorphous or partially crystalline film and subsequently at least partially or further crystallized. For example, the silicon layer 50 can by provided by using a deposition and/or crystallization process as described in commonly owned co-pending U.S. Patent Application having Attorney Docket No. HON0012/US, entitled SILICON-INSULATOR-SILICON THIN-FILM STRUCTURES FOR OPTICAL MODULATORS AND METHODS OF MANUFACTURE, filed on August 10, 2004 and having serial number 10/915,299, the entire disclosure of which is fully incorporated herein by reference for all purposes.

With respect to epitaxially growing the second silicon layer 50, the surface 48 preferably functions as a seed or template to initiate crystal growth in accordance with the present invention. Growth of epitaxial material preferably originates at or from surface 48. In this way, vacuum deposition processes such as molecular beam epitaxy or metal organic chemical vapor deposition or the like can be used to grow a crystalline silicon layer on the surface 48. The second silicon layer 50 can be provided in a way that allows formation of the overcoat portion 54 or in a way that prevents formation of the overcoat portion 54 such as by using a masking technique as noted below. In any event, a crystalline silicon layer is preferably epitaxially provided in the channel 46 in accordance with the present invention.

In accordance with the present invention an amorphous silicon layer can be deposited in the channel 46 to provide the waveguide portion 52 and overcoat portion 54. Any technique such as low pressure chemical vapor deposition or the like, for example, can be used. The waveguide portion 52 of the silicon layer 50, if provided as an amorphous or polycrystalline material, is preferably thermally processed such as by using a furnace, epi reactor, rapid thermal processor, heated element, or laser system to at least partially crystallize the waveguide portion 52 of the second silicon layer 50. The surface 48 can also function to help crystallize such an amorphous silicon layer when the waveguide portion 52 is provided this way.

Any process can be used that is capable of at least partially crystallizing a silicon layer, such as an amorphous silicon layer, to provide a desired material quality. Such crystallization can be done at any time after the second silicon layer is formed. Moreover, any process capable of improving the optical transmission properties of a silicon material, whether crystalline or not, may be used. Moreover, such a technique can be used to improve the crystallinity, such as by reducing defects or the like, of a crystalline, polycrystalline or partially crystalline silicon layer for the purpose of improving optical transmission properties. For example, crystallization of deposited silicon films by furnace, lamp, and laser techniques at a sufficient temperature and time to achieve a desired degree of crystallization can be used.

At any time after deposition of the second silicon layer 50, any desired portion of the overcoat portion 54 can be substantially or partially removed to define a waveguide structure 56 as illustrated in Figure 5, However, it is contemplated that the overcoat portion 54 does not need to be removed. Removal can be done, for example, before or after an amorphous material is crystallized or partially crystallized. For example, a wet or dry etching technique can be used. Also, a planarization process can be used, such as by using chemical mechanical processing (CMP). Any known or developed methods for planarizing or removing materials are contemplated, and such processes may be conducted by any number of combined steps of multiple varieties.

It is contemplated that the waveguide structure 56 can be made without forming an overcoat portion 54 of the second silicon layer 50 by providing silicon only within the defined channel. Conventionally known or future developed photolithography and/or masking techniques can be used to limit or prevent material from being deposited in certain predetermined regions. For example, a mask formed from photosensitive material can be used to prevent deposition on the dielectric layer 44. If desired, the same mask that is used to define and form the channel 46 can be used along with an appropriate liftoff process. It is also contemplated that techniques such as selective epitaxial growth can be used in accordance with the present invention.

In accordance with the present invention, the waveguide structure 56 can be used to provide one or more optical interconnection between any desired opto-electronic devices or electrical devices of a photonic integrated circuit or the like. Such opto-electronic device may include lasers, receivers, detectors, semiconductor optical amplifiers, and other active and passive semiconductor optical devices. Such electronic devices may include transistors, resistors, capacitors, and inductors. A waveguide in accordance with the present invention may provide any desired optical interconnection or communication path between such devices or components including paths that split or combine optical signals.

The waveguide structure 56 is particularly advantageous because the first silicon layer 40 and the waveguide portion 52 of the second silicon layer 50 can be provided as high quality material that can provide low transmission loss optical communication. Preferably, the silicon layer 40 comprises a single crystal silicon layer that has minimal crystal defects or imperfections that could contribute to optical transmission losses. Such high quality silicon material is available from preferred silicon-on-insulater structures but may be formed from other suitable growth techniques. Because the waveguide portion 52 of the second silicon layer 50 can be epitaxial grown or crystallized from surface 48 of the silicon layer 40 in accordance with the present invention, a single crystal silicon layer having minimal crystal defects can be provided as the waveguide portion 52. In this way, the waveguide portion 52 effectively functions as an extension of the silicon layer 40. The combination of the waveguide portion 52 and the silicon layer provides a guiding region with greater cross-sectiotw area than can be provided by the silicon layer 40 alone, This can be particularly advantageous where the thickness of silicon layer 40 is limited, such as based on the structure or design of any opto-electronic or electronic devices integrated on the same substrate as the waveguide 56.

The present invention has now been described with reference to several embodiments thereof. The entire disclosure of any patent or patent application identified herein is hereby incorporated by reference. The foregoing detailed description and examples have been given for clarity of understanding only. No unnecessary limitations are to be understood therefrom. It will be apparent to these skilled in the art that many changes can be made in the embodiments described without departing from the scope of the invention. Thus, the scope of the present invention should not be limited to the structures described herein, but only by the structures described by the language of the claims and the equivalents of those structures.

## Claims

1. A method of making a silicon based thin-film optical waveguide, the method comprising the steps of:
providing a substrate comprising a silicon layer having a surface;
depositing a thin-film dielectric layer on at least a portion of the surface of the silicon layer of the substrate;
forming a channel in the thin-film dielectric layer that exposes a portion of the surface of the silicon layer of the substrate thereby defining at least a portion of a path for an optical waveguide; and
providing a silicon layer in at least a portion of the channel and in contact with the exposed portion of the surface of the silicon layer of the substrate.

2. The method of claim 1, wherein the silicon layer of the substrate comprises single crystal silicon.

3. The method of claim 1, wherein the step of forming a channel in the thin-film dielectric layer comprises removing a portion of the thin-film dielectric layer.

4. The method of claim 1, wherein the step of providing a silicon layer in at least a portion of the channel comprises depositing a silicon layer in the at least a portion of the channel

5. The method of claim 4, wherein the step of depositing a silicon layer in the at least a portion of the channel comprises epitaxially growing a single crystal layer in the at least a portion of the channel.

6. The method of claim 5, comprising originating the epitaxial growth of the single crystal layer at the exposed portion of the surface of the silicon layer of the substrate.

7. The method of claim 4, wherein the step of depositing a silicon layer in the at least a portion of the channel comprises depositing an amorphous silicon layer in the at least a portion of the channel.

8. The method of claim 7, comprising at least partially crystallizing at least a portion of the amorphous silicon layer.

9. The method of claim 8, wherein the step of crystallizing at least a portion of the amorphous silicon layer comprises heating the at least a portion of the amorphous silicon layer.

10. The method of claim 4, comprising planarizing the thin-film dielectric layer and the silicon layer deposited in the at least a portion of the channel in the thin-film dielectric layer.
